# EUROPÄISCHE PATENTANMELDUNG

(11) **EP 1 445 526 A1**
(43) Veröffentlichungstag der Anmeldung: **11.08.2004**
(21) Anmeldenummer: 04000674.4
(22) Anmeldetag: 15.01.2004
(51) Int. Cl.: F16L 33/08, F16L 33/02

(54) **Fixierteil für eine Schlauchschelle**

(30) Priorität: 04.02.2003 DE 10304514
(71) Anmelder: VERITAS AG, 63571 Gelnhausen (DE)
(72) Erfinder: Cöl, Isa, 60385 Frankfurt (DE); Rösch, Thomas, 63589 Linsengericht (DE); Keller, Uwe, 63571 Gelnhausen (DE)
(74) Vertreter: Schickedanz, Willi, Dr. Dipl.-Ing.

(57) **Zusammenfassung**

Die Erfindung betrifft ein Fixierteil (12) für eine Schlauchschelle (31), die an einem Schlauchende (30) montierbar ist, wobei das Fixierteil (12) wenigstens zwei parallel zueinander verlaufende und dem Umfang des Schlauchendes (30) folgende Stege (13,14) aufweist sowie wenigstens zwei senkrecht hierzu verlaufende Stege (15,16,17,18,19). Diejenigen Seiten (67) der dem Umfang des Schlauchendes folgenden Stege (13,14), die auf das Innere des Schlauchendes (30) gerichtet sind, haben von der Seite (68) des wenigstens einen senkrechten Stegs (17), die ebenfalls auf das Innere des Schlauchendes (30) gerichtet ist, einen Abstand, der etwa der Stärke der Schlauchschelle (31) entspricht. Hierdurch ist die Schlauchschelle (31) gewissermaßen zwischen Schlauchoberseite und dem wenigstens einen senkrechten Steg (17) eingebettet.

## Beschreibung

Die Erfindung betrifft ein Fixierteil für eine Schlauchschelle nach dem Oberbegriff des Schutzanspruchs 1.

Fixierteile für Schlauchschellen dienen dazu, bereits vor der Montage eines Schlauchs auf einem Rohrstück die Position der Schlauchschelle auf dem Schlauch festzulegen. Der auf diese Weise vorbereitete Schlauch wird dann direkt auf einen Rohrstutzen aufgesteckt und durch Anziehen der Schlauchschelle befestigt.

Es ist bereits eine Schlauchschelle mit einem ringförmig ausgebildeten und aus elastischem Material bestehenden Halteteil bekannt, wobei das Halteteil aus zwei nebeneinander angeordneten, koaxialen und offenen Ringen besteht, deren Enden paarweise in Axialrichtung durch Stege miteinander verbunden sind (EP 0 593 852 B1). Die Schlauchschelle ist hierbei zwischen die offenen Ringe eingesetzt.

Weiterhin ist eine Vorrichtung zum Festklemmen eines auf einem Rohrendabschnitt aufgeschobenen Schlauchendabschnitts aus überwiegend weichelastomerem Material bekannt, wobei der Schlauchendabschnitt mit einer Schlauchklemme umgeben ist (DE 195 33 553 A1). Um den Schlauchabschnitt ist auch noch ein Sicherungsring vorgesehen, der radial zwischen Schlauch und Schlauchklemme angeordnet ist und aus hartelastischem Material besteht.

Schließlich ist auch noch eine Schlauchanordnung bekannt, die einen Schlauch aus polymerem Werkstoff umfasst, der insbesondere mit einem eingebetteten Festigkeitsträger versehen ist, wobei wenigstens ein Schlauchende auf einen Stutzen aus Metall oder Kunststoff aufgeschoben ist und eine Schraubschelle das Schlauchende auf den Stutzen presst (DE 101 28 457 A1, insbesondere Fig. 3).

Der Erfindung liegt die Aufgabe zugrunde, ein Fixierteil für eine Schlauchschelle zu schaffen, das die Schlauchschelle verdrehfest und gegen axiale Verschiebung an einem Schlauchende festhält.

Diese Aufgabe wird gemäß den Merkmalen des Patentanspruchs 1 gelöst.

Die Erfindung betrifft somit ein Fixierteil für eine Schlauchschelle, die an einem Schlauchende montierbar ist, wobei das Fixierteil wenigstens zwei parallel zueinander verlaufende und dem Umfang des Schlauchendes folgende Stege aufweist sowie wenigstens zwei senkrecht hierzu verlaufende Stege. Diejenigen Seiten der dem Umfang des Schlauchendes folgenden Stege, die auf das Innere des Schlauchendes gerichtet sind, haben von der Seite des wenigstens einen Stegs, der ebenfalls auf das Innere des Schlauchendes gerichtet ist, einen Abstand, der etwa der Stärke der Schlauchschelle entspricht. Hierdurch ist die Schlauchschelle gewissermaßen zwischen Schlauchoberseite und dem wenigstens einen Steg eingebettet.

Der mit der Erfindung erzielte Vorteil besteht insbesondere darin, dass die Ausdehnung des Schlauchendes in radialer Richtung beim Aufschieben oder Aufstülpen auf ein Rohr nicht verhindert wird, weil sich die Schlauchschelle innerhalb des Fixierteils bewegen kann. Außerdem ist der Platzbedarf des Fixierteils gering, und seine Montage ist einfach und leicht.

Ein Ausführungsbeispiel der Erfindung ist in den Zeichnungen dargestellt und wird im Folgenden näher beschrieben. Es zeigen:
Fig. 1 ein Schlauchende mit trichterförmigem Abschluss;
Fig. 2 ein Schlauchende mit senkrecht auf dem Schlauchumfang stehenden Flanschen;
Fig. 3 ein einteiliges Fixierteil;
Fig. 4 eine Explosionsdarstellung von Schlauchende, Fixierteil und Schlauchschelle;
Fig. 5 die Bauelemente gemäß Fig. 4 in montiertem Zustand;
Fig. 6 ein zweiteiliges Fixierelement mit Schlauchende und Schlauchschelle;
Fig. 7 eine erste Ansicht der Bauelemente der Fig. 6 in montiertem Zustand;
Fig. 8 eine zweite Ansicht der Bauelemente der Fig. 6 in montiertem Zustand;
Fig. 9 eine Explosionsdarstellung eines dritten Fixierelements mit Schlauchende und Schlauchschelle;
Fig. 10 die Bauelemente der Fig. 9 in montiertem Zustand;
Fig. 11a bis 11c Befestigungsvarianten für die Befestigung eines Fixierteils an einem Schlauchende.

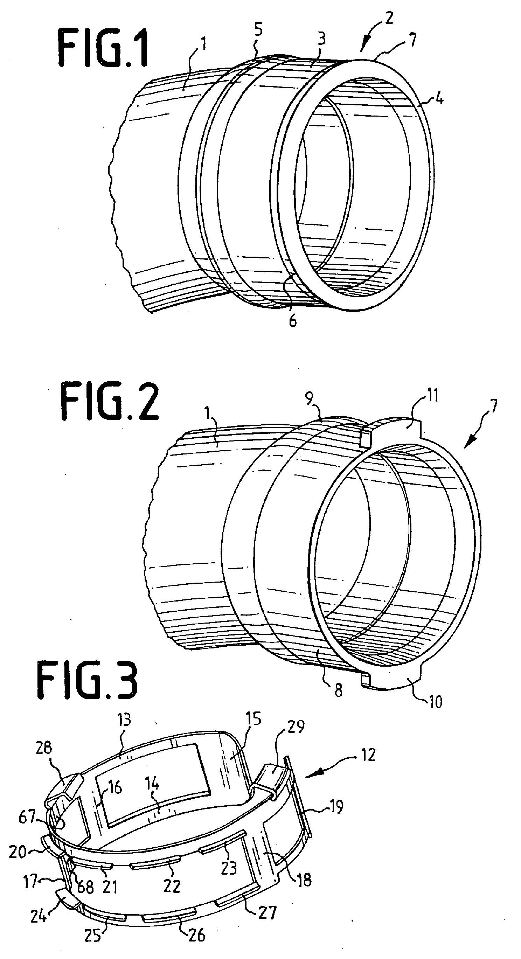

In der Fig. 1 ist das Ende eines Schlauchs 1 dargestellt, das auf einen nicht dargestellten Rohrstutzen aufgeschoben und auf diesem fixiert werden kann. Dieses Schlauchende 2 weist einen zylindrischen mittleren Teil 3 auf, der in einem vorderen im Querschnitt trichterförmigen Wulst 4 und in einem hinteren im Querschnitt kreisringförmigen Wulst 5 endet. Der hintere Wulst 5 schließt an den Schlauch 1 an.

Der trichterförmige Wulst 4 weist eine Schräge 6 auf, die vom zylindrischen Teil 3 ausgehend bis auf einen Rand 7 ansteigt, dessen Umfang größer als der Umfang des zylindrischen Teils 3 ist.

Die in der Fig. 1 nicht dargestellte Schlauchschelle wird - wie später noch erläutert - auf den zylindrischen mittleren Teil 3 aufgezogen.

In der Fig. 2 ist ein anderes Schlauchende 7 dargestellt, das zwar ebenfalls einen zylindrischen mittleren Teil 8 und einen hinteren, im Querschnitt kreisringförmigen Wulst 9 aufweist, aber vorne nicht mit einem im Querschnitt trichterförmigen Wulst abschließt. Statt dessen befinden sich auf dem zylindrischen mittleren Teil 8 am vorderen Ende zwei radial nach außen verlaufende Stege 10, 11. Eine nicht dargestellte Schlauchschelle wird in den Zwischenraum zwischen den Stegen 10, 11 und dem hinteren Wulst 9 gelegt.

Die Fig. 3 zeigt einen Fixierteil 12 für eine Schlauchschelle. Dieses Fixierteil 12 weist zwei parallel zueinander verlaufende kreisförmig gekrümmte Stege 13, 14 auf, die über Querstege 15 bis 19 miteinander verbunden sind. Senkrecht nach außen gerichtet und auf den Stegen 13, 14 stehend sind Führungen 20 bis 27, die dazu dienen, eine Schlauchschelle zu führen. Auf dem oberen Steg 13 sind zwei Verbindungselemente 28, 29 vorgesehen, die dazu dienen, das Fixierteil 12 mit einem Schlauchende zu verbinden. Die Innenseite 68 des Querstegs 17 hat von der Innenseite 67 des gekrümmten Stegs 13 in radialer Richtung einen Abstand, der etwa der Stärke einer Schlauchschelle entspricht. Die anderen Querstege 15, 16, 18, 19 können ebenfalls ein solchen Abstand aufweisen, müssen dies jedoch nicht. Es genügt, wenn die Schlauchschelle von wenigstens einem Quersteg, z. B. dem Quersteg 17, nach der Montage überlagert wird. Die anderen Querstege können von der Schlauchschelle überlagert werden.

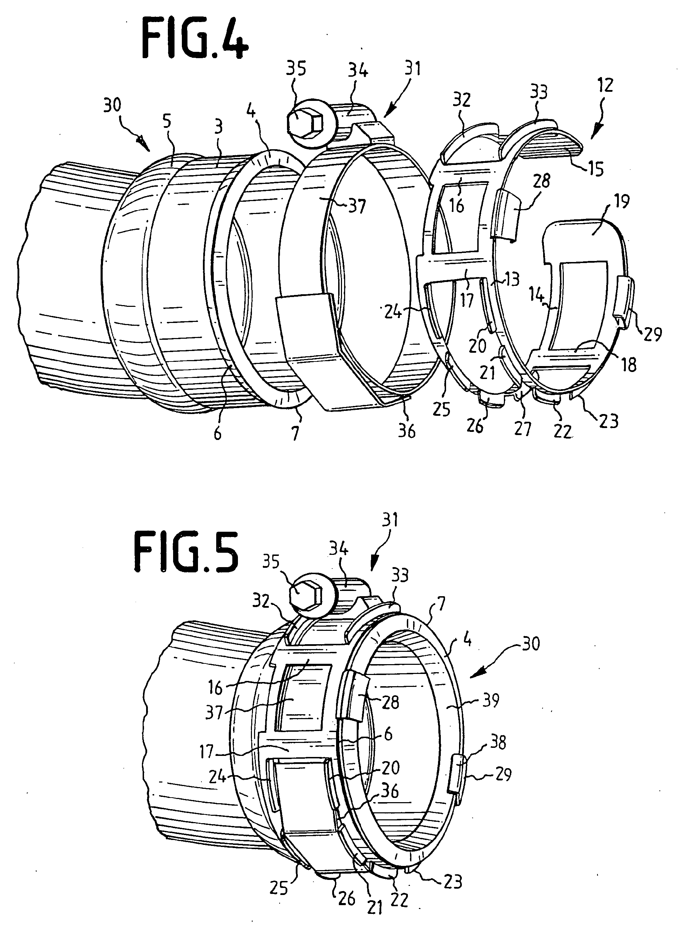

Die Fig. 4 zeigt in einer Explosionsdarstellung eine Anordnung aus Schlauchende 30, Schlauchschelle 31 und Fixierteil 12. Die Schlauchschelle 31 ist als Wellfederschelle ausgebildet, die einen Schneckenantrieb 34 mit einem Schraubkopf 35 sowie einen kreisbogenförmigen Teil 36 aufweist, der auf der Außenseite eines kreisförmigen Teils 37 angeordnet ist. Dieser Teil 36 kann alternativ auch auf der Innenseite des Teils 37 angeordnet sein.

Bei dem Fixierteil 12 erkennt man zwei weitere Führungslaschen 32, 33 in der Nähe des Querstegs 15. Diese Führungslaschen 32, 33 dienen zur Führung der Schlauchschelle 31, insbesondere wenn diese auf dem Steg 16 liegt.

Die Montage der Schlauchschelle 31 und des Fixierteils 12 auf dem Schlauchende 30 wird wie folgt durchgeführt.

Vor dem Aufschieben des Fixierteils 12 auf das Schlauchende 30 wird die Schlauchschelle 31 in das Fixierteil 12 eingesetzt und dort radial und axial fixiert. Zur axialen Führung dienen die Führungslaschen 32, 33, 22, 23, 26, 27, während für die radiale Führung die Querstege 16, 17, 18 vorgesehen sind. Nach dem Aufschieben von Fixierteil 12 und Schlauchschelle 31 auf das Schlauchende 30 werden sie in die gewünschte Lage gebracht. In dieser Lage wird das Fixierteil durch Verpressen, Vernieten oder Einstechen mit dem Schlauchende 30 verbunden. Weil das Fixierteil 12 offen, also nicht rundum geschlossen ist, entstehen beim Aufschieben auf das Schlauchende keine Spannungen zwischen Schlauchende 30 und Schlauchschelle 31. Das Schlauchende 30 kann sich somit beim Aufschieben auf einen Stutzen radial ausdehnen.

Nach dem Aufschieben des Schlauchendes auf einen Stutzen wird die Schelle mittels der Schraube 35 angezogen.

In der Fig. 5 ist die montierte Schlauchschelle 31 mit dem montierten Fixierteil 12 dargestellt. Man erkennt hierbei, dass die Querstege 16, 17 über dem kreisförmigen Schellenteil 37 liegen, d. h. die Schlauchschelle 31 liegt direkt auf dem Schlauchende 30 auf und ist von dem Fixierteil 12 umgeben. Die Querstege 16, 17 des Fixierteils haben zur Oberfläche des Schlauchendes einen Abstand, der etwa der Stärke der Schlauchschelle 31 entspricht. Dieses Fixierteil 12 ist mit Hilfe der Verbindungselemente 28, 29 mit dem Schlauchende 30 verbunden. Die Verbindung wird dabei mittels Verpressen hergestellt, d. h. die Halteelemente, deren innere Konturen an die äußere Kontur 4, 6, 7 des äußeren Rands des Schlauchendes 30 angepasst sind, werden mit einem Teil 38 gegen die Innenfläche 39 des Schlauchendes gedrückt. Die Führungslaschen 32, 33 dienen dazu, die Schlauchschelle 31 und deren Schneckenantrieb 34 gegen axiale Verschiebungen zu sichern.

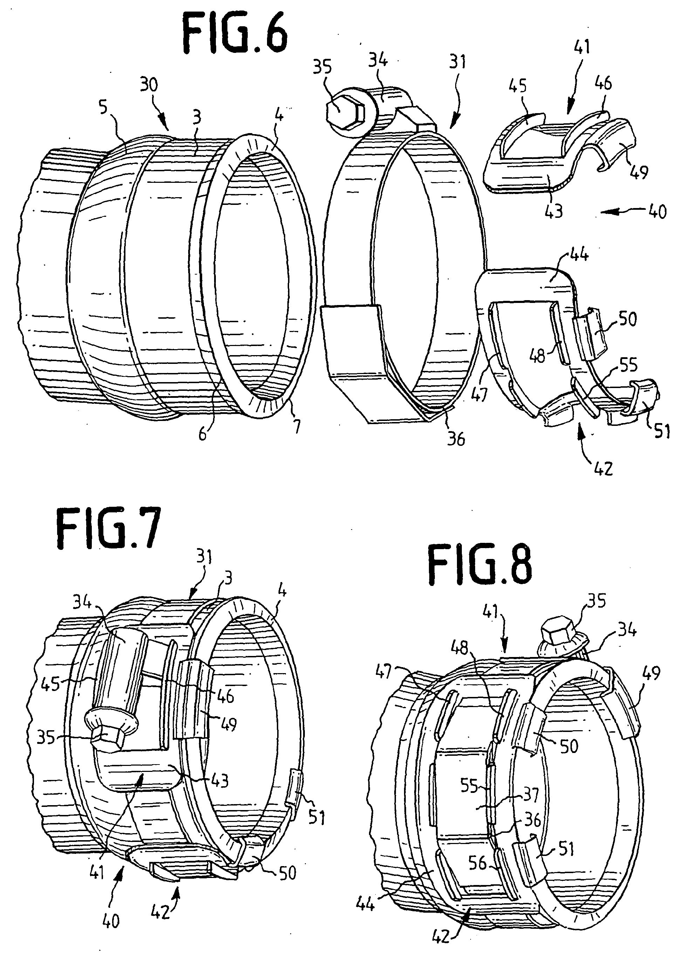

In der Fig. 6 ist eine weitere Ausführungsform eines Fixierteils 40 zusammen mit der Schlauchschelle 31 und dem Schlauchende 30 in einer Explosionszeichnung dargestellt. Dieses Fixierteil besteht aus zwei Einzelteilen 41, 42, die im Wesentlichen die Form eines gekrümmten Rahmens 43, 44 besitzen, der mit seitlichen Führungsleisten 45, 46 bzw. 47, 48 für die Schlauchschelle 31 versehen ist. Beide Einzelteile 41, 42 sind außerdem mit Laschen 49, 50, 41 versehen, die zur Befestigung der Einzelteile 41, 42 an dem Schlauchende 30 dienen.

Die Fig. 7 zeigt das zweiteilige Fixierteil 40 gemäß Fig. 6 in einer ersten Ansicht einer montierten Stellung. Man erkennt hierbei, dass das Einzelteil 41 im Wesentlichen dazu dient, den Schellenantrieb 34 zu umfassen und festzuhalten. Das Einzelteil 42 umfasst dagegen im Wesentlichen den Teil der Schlauchschelle 31, der mit dem breiten Element 36 versehen ist.

Aus der Fig. 8 geht dies noch deutlicher hervor, weil in der Fig. 8 das Einzelteil 42 im Vordergrund steht.

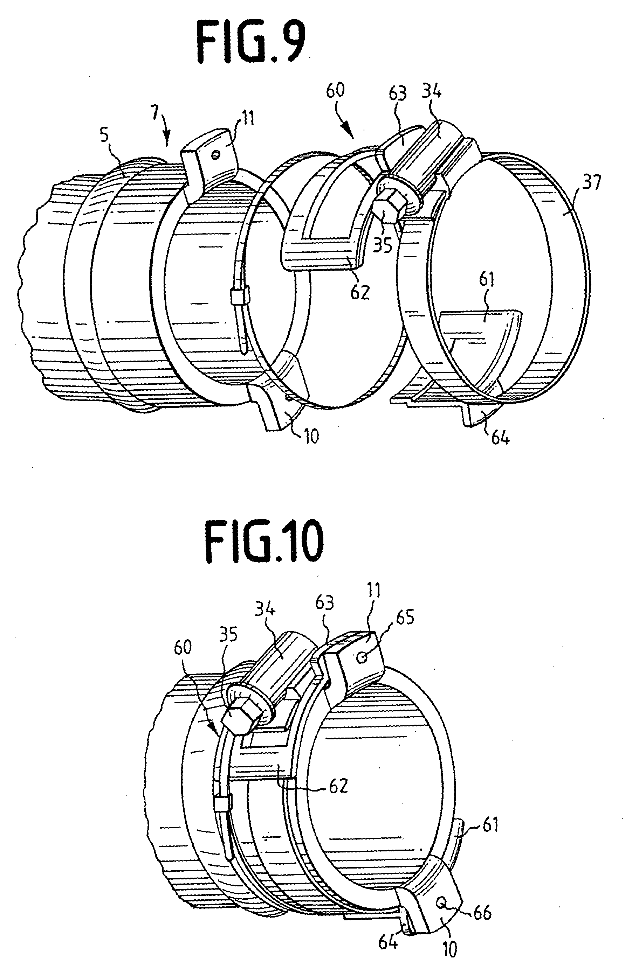

Ein zweiteiliges Fixierteil 60 ist auch in der Fig. 9 dargestellt, und zwar zusammen mit einem Schlauchende gemäß Fig. 2. Von den beiden Einzelteilen 61, 62 hat das Einzelteil 62 die Form eines gekrümmten Rahmens, während das Einzelteil 61 die Form einer gekrümmten Platte hat. An beiden Einzelteilen 61, 62 ist jeweils eine Lasche 63 bzw. 64 vorgesehen, die mit den Vorsprüngen 10, 11 des Schlauchendes 7 verbunden werden.

In der Fig. 10 ist das Fixierteil 60 im montierten Zustand dargestellt. Man erkennt hierbei deutlich, dass die Schlauchschelle keine Verbreiterung aufweist und die Einzelteile 61, 62 des Fixierteils mit den Vorsprüngen 10, 11 des Schlauchendes mittels Nieten 65, 66 verbunden sind.

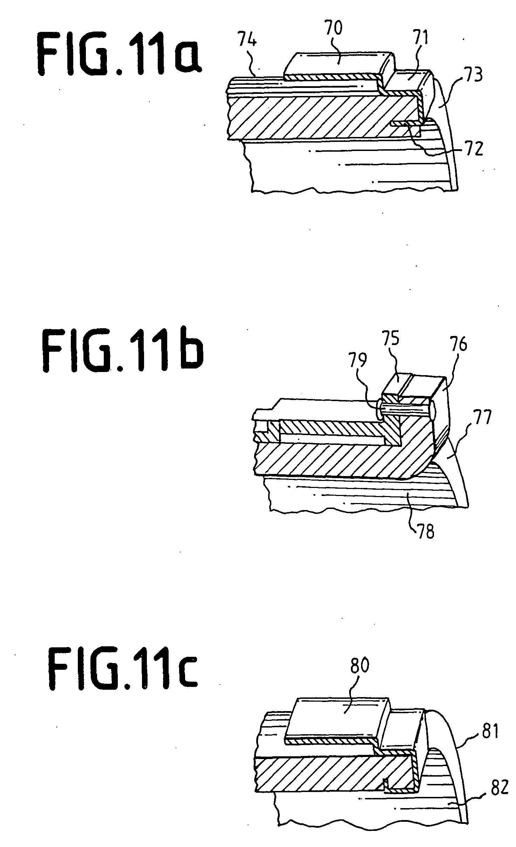

In den Fig. 11a bis 11c sind einige Verbindungsprinzipien zwischen einem Fixierteil und einem Schlauchende dargestellt.

Fig. 11a zeigt eine mit dem nicht dargestellten Fixierteil verbundene Lasche 70, die ein U-förmiges Element 71 aufweist, dessen einer U-Schenkel 72 in das Ende 73 eines Schlauchs 74 eingestochen ist.

Fig. 11b zeigt eine Verbindung mittels Vernieten. Eine Lasche 75, die mit einem nicht dargestellten Fixierteil verbunden ist, wird hierbei mit einem nach oben gerichteten Vorsprung 76 des Endes 77 eines Schlauchs 78 mittels einer Niete 79 verbunden.

Fig. 11c zeigt eine ähnliche Lasche 80 wie die Fig. 11a, die jedoch mit dem Ende 81 eines Schlauchs 82 verpresst ist.

## Patentansprüche

1. Fixierteil für eine Schlauchschelle, die an einem Schlauchende montierbar ist, wobei das Fixierteil wenigstens zwei parallel zueinander verlaufende und dem Umfang des Schlauchendes folgende Stege aufweist sowie wenigstens zwei senkrecht hierzu verlaufende Stege, **dadurch gekennzeichnet, dass** die Unterseite wenigstens eines der senkrecht zum Schlauchumfang verlaufenden Stege (17) von der Unterseite der dem Umfang des Schlauchendes (7) folgenden Stege (13, 14) einen radialen Abstand in etwa der Stärke der Schlauchschelle (31) hat.

2. Fixierteil nach Anspruch 1, **dadurch gekennzeichnet, dass** es nicht den ganzen Umfang des Schlauchendes (7) umgibt.

3. Fixierteil nach Anspruch 1, **dadurch gekennzeichnet, dass** es aus mehreren Einzelteilen (41, 42) besteht, die den Umfang des Schlauchendes (7) umgeben.

4. Fixierteil nach Anspruch 3, **dadurch gekennzeichnet, dass** ein Einzelteil (41) einen Schellenantrieb (34) umfasst.

5. Fixierteil nach Anspruch 3, **dadurch gekennzeichnet, dass** ein Einzelteil (42) den Teil einer Schlauchschelle (31) umfasst, der mit einem breiteren Element (36) versehen ist.

6. Fixierteil nach Anspruch 1, **dadurch gekennzeichnet, dass** es wenigstens ein Verbindungselement (48 - 51; 28, 29) aufweist, mit dem es an dem Schlauchende fest verkoppelt ist.

7. Fixierteil nach Anspruch 6, **dadurch gekennzeichnet, dass** das Verbindungselement (28, 29; 48 - 51) mit dem Schlauchende verpresst ist.

8. Fixierteil nach Anspruch 6, **dadurch gekennzeichnet, dass** das Verbindungselement in das Schlauchende eingestochen ist.

9. Fixierteil nach Anspruch 1, **dadurch gekennzeichnet, dass** es an einem Schlauchende mit trichterförmigem Rand vorgesehen ist.

10. Fixierteil nach Anspruch 1, **dadurch gekennzeichnet, dass** es an einem Schlauchende vorgesehen ist, an dessen Rand wenigstens eine Lasche vorgesehen ist, die radial nach außen zur Oberfläche des Schlauchendes verläuft.

11. Fixierteil nach den Ansprüchen 1, 6 und 10, **dadurch gekennzeichnet, dass** das Verbindungselement (63) mit der Lasche (11) des Schlauchendes über eine Niete (65) verbunden ist.

12. Fixierteil nach Anspruch 1, **dadurch gekennzeichnet, dass** die dem Umfang des Schlauchendes folgenden Stege Laschen (22, 26, 32, 33) zur axialen Führung der Schlauchschelle (31) aufweisen.

13. Fixierteil nach Anspruch 1, **dadurch gekennzeichnet, dass** es aus Metall besteht.

14. Fixierteil nach Anspruch 1, **dadurch gekennzeichnet, dass** es aus Kunststoff besteht.

15. Fixierteil nach Anspruch 1, **dadurch gekennzeichnet, dass** nach der Montage die Schlauchschelle (31) an wenigstens einer Stelle von einem senkrecht zum Schlauchumfang verlaufenden Steg (17) überlagert ist.

16. Fixierteil nach Anspruch 1, **dadurch gekennzeichnet, dass** nach der Montage die Schlauchschelle (31) an wenigstens einer Stelle einen senkrecht zum Schlauchumfang verlaufenden Steg überlagert.

17. Fixierteil nach Anspruch 1, **dadurch gekennzeichnet, dass** nach der Montage die Schlauchschelle (31) auf wenigstens einem senkrecht zum Schlauchumfang verlaufenden Steg liegt und wenigstens von einem senkrecht zum Schlauchumfang verlaufenden Steg überlagert ist.
